# EUROPEAN PATENT SPECIFICATION

(11) **EP 4 109 809 B1**
(45) Date of publication and mention of the grant of the patent: **08.10.2025**
(21) Application number: 21181432.2
(22) Date of filing: 24.06.2021
(51) Int. Cl.: H04L 9/06

(54) **METHOD FOR ADJUSTING A SHIFTED TIME IN A COMMUNICATION UNIT**
VERFAHREN ZUR EINSTELLUNG EINER VERSCHOBENEN ZEIT IN EINER KOMMUNIKATIONSEINHEIT
PROCÉDÉ DE RÉGLAGE D'UN TEMPS DÉCALÉ DANS UNE UNITÉ DE COMMUNICATION

(43) Date of publication of application: 28.12.2022
(73) Proprietor: Sensus Spectrum, LLC, Morrisville, NC 27560 (US)
(72) Inventor: BAUMANN, Joachim, 74629 Pfedelbach (DE)
(74) Representative: Patentanwälte Dr. Keller, Schwertfeger Partnerschaft mbB

(56) References cited:
- US-A1- 2005 022 009
- BRUNSCHWILER CYRILL ET AL: "Wireless M-Bus SecurityWhitepaper Black Hat USA 2013", COMPASS SECURITY, 30 June 2013 (2013-06-30), pages 1 - 70, XP055836807
- OMS GROUP: "Open Metering System Specification Volume 2 Primary Communication Issue 3.0.1", 29 January 2011 (2011-01-29), pages 1 - 114, XP055430096, Retrieved from the Internet <URL:http://oms-group.org/fileadmin/files/download4all/omsSpezifikationen/generation3/spezifikation/vol2/OMS-Spec_Vol2_Primary_v301.pdf> [retrieved on 20171129]
- YOUNG SIL LEE ET AL: "A study on efficient OTP generation using stream cipher with random digit", ADVANCED COMMUNICATION TECHNOLOGY (ICACT), 2010 THE 12TH INTERNATIONAL CONFERENCE ON, IEEE, PISCATAWAY, NJ, USA, 7 February 2010 (2010-02-07), pages 1670 - 1675, XP031653852, ISBN: 978-1-4244-5427-3
- "Communication systems for meters and remote reading of meters -Part 4: Wireless meter readout (Radio meter reading for operation in SRD bands) ED - CEN", DRAFT PREN 13757-4 REV, CEN, 1 September 2011 (2011-09-01), pages 1 - 62, XP002700058

## Description

The present invention relates to a method for adjusting a shifted time in a communication unit, the communication unit being a transmitter and/or a receiver and being used in an encrypted communication, wherein the communication unit has an internal time and the internal time is used for cryptographic operations.

There are a lot of applications in which data are remotely transferred in a communication network. The data are transferred from a transmitter to a receiver by a wired connection or wireless. Especially in the case of a wireless transmission of data in a communication network, there is the need to protect the data from being misused. Therefore, it is common to encrypt data in a transmitter before transmitting the data from the transmitter to a receiver. The receiver has a matching key for decrypting the encrypted data telegram.

For example, document "Wireless M-Bus Security Whitepaper Black Hat USA 2013, by Cyrill Brunschwiler, COMPASS SECURITY (XP055836807) relates to the encryption of data sent by a wireless Meter Bus.

It is advisable to use different encryption codes for each encryption operation. Using the same encryption code for different encryption operations increases the risk of decoding the encrypted data by unauthorized persons.

In an encryption operation often a secret key known by the receiver and the transmitter and an initialization vector are combined. The secret key exchanged between the receiver and transmitter remains constant while the initialization vector is different for different encryption operations and ensures that each encryption operation has a different code. A transmission system using the same initialization vector twice or even more often with the same secret key has a low data safety.

In order to avoid the use of the same initialization vector twice or more often, the initialization vector might be a counter, incrementing each time when an encrypted telegram is formed. This solution is applicable in systems in which each encrypted telegram is decrypted by the receiver. Each time the receiver decrypts an encrypted telegram the initialization vector being a counter is incremented in the receiver. However, in some networks the transmitter sends more encrypted telegrams than the receiver decrypts. Thus, the initialization vectors in the transmitter and in the receiver differ after several encrypted transmissions. Additionally, transmissions can be lost, for example when there is interference or the radio-channel is fading. All this leads to difficulties in decrypting the encrypted data by the receiver. A solution might be to add the counter in the telegram's unencrypted part. This ensures that the receiver can recover the initialization vector any time. The drawback is an extended telegram length. However, an extended telegram increases battery consumption and on-air-time in an undesired way.

Another possibility of forming an initialization vector is the use of the time. The matching key for decrypting and encrypting data, especially the initialization vector contains information about the time.

For a successful encryption and decryption it is necessary that the transmitter and receiver have the same time basis.

The same time basis might be the actual world time. A transmitter and a receiver having the actual world time as internal time will always have the same comparable internal time. If a transmitter and a receiver have the same internal time, the internal time is usable for a common key for successfully encrypting data in a transmitter and decrypting data in a receiver.

The clock in a communication unit like a transmitter or receiver device is usually set to the present world time at a certain time, for example at the time of the installation of the communication unit. It is known that over a long period the internal time of the communication unit differs from the world time. The time shift in a transmitter and in a receiver might be different in that the receiver and the transmitter have different internal times. The transmitter and receiver having different internal times leads to trouble in encrypting or decrypting or decoding data.

A shifted time between transmitter and receiver is an issue for example in a network of flowmeters being read out remotely. Flowmeters are installed in a household and collect consumption data with respect to the consumed water, gas, heat or electricity over many years. The internal clock in a flowmeter set at the actual world time at the time of installation will shift over the months or years of the flowmeter's collecting consumption data. The internal time of the flowmeter might be retarded or in advance compared to the actual world time. Having a lot of flowmeters, the time shift might be different in each flowmeter after a certain time. The degree of the time shift in a flowmeter is not predictable.

Consumption data collected by a flow meter are transmitted to a read out unit.

The read out unit might be a stationary unit as a computer in a building or a mobile unit as a mobile hand held unit. In case of the use of a mobile unit, a person walks or drives outside the houses past the households having flowmeters and gathers the data sent by the flowmeters installed in the households via the mobile unit. The data gathered by the read out units are the basis for calculating the consumption costs of a household having flowmeters.

As the transmission of the consumption data is done wireless, the consumption data have to be encrypted before being sent to the read out unit. If the internal time of the flow meter is used for encryption and the internal time of the read out unit is used for the decryption, the internal time of the flow meter and the read out meter must be the same. In flow meters having a shifted internal time compared to the internal time of the read out unit, the decryption of the data in the read out unit will probably not be successful.

The influence of a time shift is reduced if encrypted data or telegrams are sent in long time intervals for example only every hour or every day. In this case, the matching code for decrypting or encrypting might only use information related to the actual hour or the actual day. Time shifts in the range of minutes would not influence decrypting or encrypting data.

In a network of remotely read out flowmeters, the flowmeters send encrypted telegrams on a very short time scale. Often telegrams are sent with a frequency of less than a minute. If the measured consumption data are read out by a mobile unit, the consumption data measured by the flowmeter have to be available whenever the user of the mobile unit wants to gather the consumption data in its read out unit. The user of the mobile unit does not want to wait for hours until he gets a data telegram containing the information about the consumption data. Thus, in practice, a frequency of sent telegrams containing information about the consumption data collected by a flow meter of less than a minute is reasonable. Increasing the time interval for sending telegrams in order to reduce the influence of a shifted time in a flow meter is not a desired way.

Another possibility to overcome this issue might be the use of radio controlled clocks in the flowmeter or in the read out unit. However, this is very costly and not desired in networks with flowmeters.

Thus, there is a need to re-adjust the internal times of communication units like receivers or transmitters.

In case an internal time has to be reset to a reference time, there is the risk that two identical initialization vectors might be created as a time information might be used twice, namely before resetting the internal time of the communication unit and after resetting the internal time of the communication unit.

A very simple proposal to overcome this problem is to set the internal clock on hold and avoid the forming and transmission of an encrypted telegram until the reference time has the same time value as the internal clock set on hold. This method is only applicable in cases in that the time shift between the reference time and the internal time is similar or shorter than the time interval between the transmissions of two successive encrypted data telegrams.

As mentioned above the flowmeter sends encrypted data with a frequency of less than a minute. However, the time shift of an internal clock with respect to a reference time might be in the range of several minutes. No operator reading out the flowmeter wants to wait for several minutes to obtain a data telegram from a flowmeter.

It is an object of the present invention to provide a method for adjusting a shifted time in a communication unit, the communication unit being a transmitter or a receiver and being used in an encrypted communication, wherein the communication unit has an internal time and the internal time is used for cryptographic operations.

Especially it is an object of the present invention to provide a method for adjusting a shifted time in a communication unit, the communication unit being a transmitter or a receiver and being used in an encrypted communication, wherein the communication unit has an internal time and the internal time is used for cryptographic operations wherein cryptographic operations are not affected even in systems with a very high transmission rate of encrypted data.

The object is solved by a method for adjusting a shifted time in a communication unit, the communication unit being a transmitter or a receiver and being used in an encrypted communication, wherein the communication unit has an internal time and the internal time is used for cryptographic operations according to claim 1.

In detail, the method for adjusting a shifted time in a communication unit, the communication unit being a transmitter or a receiver and being used in an encrypted communication, wherein the communication unit has an internal time and the internal time is used for cryptographic operations is characterized by the following steps operated with respect to a communication unit:
First of all, the communication unit receives an external reference time, the external reference time being compared with the actual internal time of the communication unit. The communication unit working in a standard mode changes from the standard mode into a changing mode if the actual value of the internal time and the external reference time differ by a first time difference value. In the standard mode the actual value of the internal time is used for cryptographic operation and for measuring the time. In the changing mode the internal time is set to the external reference time and changed ongoing in real time and the virtual internal time is used for cryptographic operations. The virtual internal time is incremented or increased by a virtual time unit each time data are encrypted and/or encrypted data are sent wherein the time duration of the virtual time unit is different from the duration of the associated real time unit. If the virtual internal time and the internal time differ by a second time difference value, there is a change from the changing mode to the standard mode, wherein the second time difference value is less than the first time difference value.

The standard mode is the mode in which the communication usually works. The changing mode is the mode in which a time shift can be performed.

The provision of a virtual internal time offers the separation of the two operations, namely measuring the time and encrypting data, in that changing or adjusting the time can be done independently of encryption operations. Preferably the virtual internal time is used as or for an initialization vector.

According to one preferred embodiment, the internal time is used as a time variable and as a counter variable, wherein in the changing mode the value of the internal time is different for the time variable and for the counter variable. This measure simplifies the method as the internal time is easily available.

The essential idea of the present invention is that in the standard mode there is one variable, namely the internal time, having a time value for measuring the time and having a counter value for getting individual initialization vectors, wherein the time value and the counter value are identical. In contrast thereto, in the changing mode the time variable for measuring the time and the counter variable for getting individual initialization vectors are different, wherein the virtual internal time is used as a counter variable having a counter value and the internal time is used as a time value for measuring the actual time.

Although, in the standard mode the internal time is used for getting individual initialization vector in the changing mode, the virtual internal time is used for getting individual initialization vector. As in the changing mode the encryption operations are independent of the actual internal time the internal time can be changed and adjusted to the reference time.

By the separation of the time parameter and the counter parameter into parameters having different values, the risk that the same time value will be used twice for an encryption operation is reduced even in cases in which the actual internal time is in advance compared to the reference time. Additionally, this method enables sending encrypted telegrams and readjusting the internal time of a receiver or a transmitter even in cases the time interval of the transmission of two successive encrypted telegrams is shorter than the time shift.

It is advantageous that in the changing mode the virtual internal time has an initial value, the initial value of the virtual internal time is set to the actual value of the internal time. As the virtual initial time is correlated to the actual time, the actual internal time and the virtual internal time might be compared.

It is a further advantage that the actual time at the beginning of the changing mode is used as initial virtual internal time. This feature decreases the time required for keeping the method in the changing mode.

In order to use the virtual internal time unit as a counter value, it is preferred that the virtual time unit is an integer time unit.

According to a preferred embodiment, the virtual time unit is associated to a real time unit, the virtual time unit has a frequency in that the virtual internal time is changed, the frequency the virtual time unit is changed is longer or shorter than the frequency of the associated real time unit. In the present method the virtual internal time together with the virtual time unit is used as a counter adjusted to the requirements of the time shift. Each time an encryption operation is done, the internal virtual time is incremented by the internal time unit. In case the internal time of a receiver or a transmitter is in advance of a reference time the virtual time unit might be a time unit which lasts longer than a real time unit. In cases in that the internal time of a receiver or a transmitter is retarded to a reference time, the virtual time unit might be a time unit which lasts shorter than a real time unit.

It is preferred that during the changing mode the encrypted data are encrypted periodically.

As the encryption of the data is done with a constant frequency, the virtual time unit might preferably be chosen to be a time unit which mathematically leads to identical values of the virtual internal time and the internal time, the internal time being identical or almost identical to the reference time. In this case, identical values comprise also identical time values rounded with respect to seconds, minutes or hours.

For example, in case the actual internal time is in advance compared to the reference time, the ratio of the time interval of two successive encryption operations and the virtual time unit might be an integer. If the actual internal time is retarded with respect to the reference time the ratio of the virtual time unit and the time interval of two successive encryption operations is an integer.

According to an alternative embodiment in the changing mode data are encrypted on demand and/or encrypted data are sent on demand.

In a special embodiment, the actual internal time is in advance compared to the reference time and the encrypted data are transmitted in defined time intervals or on demand wherein the time duration between at least two successive encryption operations have a greater value than the virtual time unit. In this case, the virtual internal time can be incremented within a longer period than the corresponding real time. The virtual internal time will be overtaken by the real time until the virtual internal time and the real time have the same time value.

A preferred method is characterized by the following steps:
Firstly, a communication unit receives an external reference time. The actual internal time and the external reference time are compared, wherein the actual time is in advance compared with the external reference time. There is a change from a standard mode to a changing mode if the actual value of the internal time and the external reference time differs by a first time value. The initial value of the virtual internal time is set to the value of the internal time at the beginning of the changing mode and the virtual internal time is used as a counter parameter for encryption/decryption operations. Also at the beginning of the changing mode the initial actual value of the internal time is reset to the reference time and the internal time is used as time parameter for measuring the real time. Then, the measuring of the actual time is started, the internal time being the reference time, and the virtual internal time is incremented by a time unit after each encryption operation and/or after each transmission of encrypted data. The operation mode is changed from the changing mode to the standard mode, if the value of the internal time and the virtual internal time have the same value or if the internal time is in advance to the virtual internal time.

According to this method, it is required that the operation mode is changed from the changing mode to the standard mode if the value of the internal time and the virtual internal time have the same value or if the internal time is in advance to the virtual internal time. In order to fulfil this requirement, the time unit for at least one incremental step has a lower value than the time unit between two encrypting operations. This enables the internal time to obtain the same or almost the same value as the virtual internal time. In order to get a short term changing mode, it is preferred that the time unit for each incremental step has a lower value than the time unit between two encrypting operations

If it is desired to keep the duration of the changing mode within a short time, it is preferred that the virtual time unit is the smallest time unit in which the internal time unit is measured. If the actual internal time unit is measured with an accuracy of seconds, the virtual internal time unit might be a second. In this case, encrypted operations can be done whenever desired during the changing mode and the actual internal time and the virtual internal time match after a certain time depending on the number of encrypted operations during the changing mode and the value of the time shift between the reference time and the internal time at the beginning of the changing mode.

It might be desired to extend the duration of the changing mode. This can be achieved in that the value of the virtual time unit is longer than the smallest time unit in which the internal time unit is measured. In this case, it takes a longer time until the internal time being the reference time reaches the virtual internal time. In order to get the condition for changing from the changing mode into the standard mode in that the actual internal time being the reference time and the virtual internal time have the same value it might be useful that the ratio of the time interval of two successive encryption operations and the virtual time unit is an integer. Otherwise the operation mode changes from the changing mode to the standard mode if the actual time is in advance compared to the virtual internal time.

In a preferred application wherein encrypted data have to be sent with a quite high frequency, it is an advantage that encrypted data are transmitted in the time range greater than 2 seconds, especially in the time range greater than 15 seconds, and the virtual time is increased by a unit of one second every time the encrypted data are transmitted.

If required, it is foreseen in the described method that the same encrypted data telegram is transmitted during the changing mode at least twice and/or that a non- encrypted data telegram is transmitted during the changing mode without changing the virtual internal time. This is advantageous for example in networks with flowmeters wherein on a short time scale an encrypted telegram is sent several times or wherein non-encrypted information between the receiver and the transmitter is exchanged.

For all mentioned methods it is an advantage if the reference time is the official world time or related to the official world time.

Preferred embodiments will be shown with respect to the enclosed figures in which:
- Fig. 1: shows a time table of operations for adjusting a shifted time in a system having periodic telegrams, wherein the internal time is advanced according to a first method;
- Fig. 2: shows a time table of operations for adjusting a shifted time in a system having periodic telegrams, wherein the internal time is advanced according to a second method;
- Fig. 3: shows a time table of operations for adjusting a shifted time in a system having periodic telegrams, wherein the internal time is delayed.

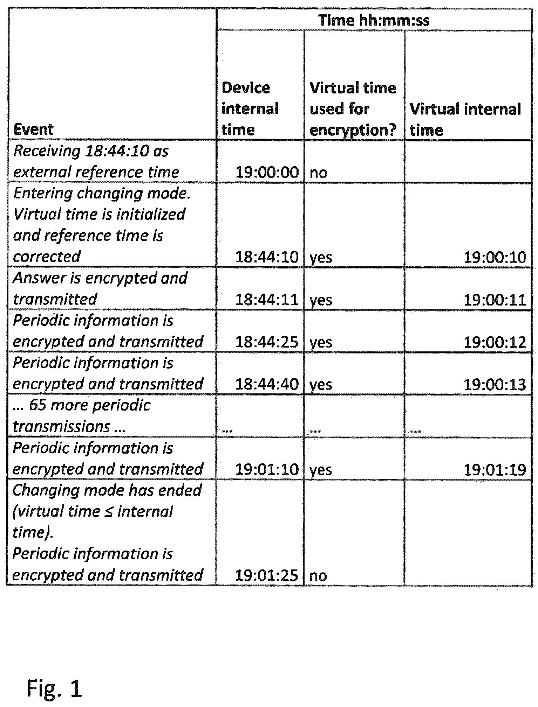

Fig. 1 to 3 show time tables of different operations in a communication unit having a time shift compared to a reference time during the adjustment of the internal time of the communication unit to a reference time.

The communication unit is part of a network comprising a plurality of receivers and transmitters. The communication unit might be a receiver, a transmitter or a unit being able to send and receive data.

In detail, the communication unit is either a flowmeter or a read out unit, wherein the flowmeter and read out unit might be a transmitter and/or a receiver. The flowmeter or the read out unit is part of a network of remotely read out flowmeters.

The flowmeters are installed in a household and collect consumption data with respect to consumed water, gas, heat or electricity over many years. The consumption data measured by a flow meter are transmitted to a read out unit. The read out unit might be a stationary unit as a computer in a building or a mobile unit as a mobile hand held unit. In case a mobile unit is used, a person walks or drives outside the houses past households having flowmeters and gathers the data sent by the flowmeters in the households via the mobile unit. The data gathered by the read out units are the basis for calculating the consumption costs of a household having flowmeters.

As the measured consumption data are sensitive data because they give information by the daily life of a person, it must be ensured that these data are not abused by a third person. Further, it must be avoided that a person manipulates the data for decreasing the billing cost. Thus, the consumption data measured by a flowmeter are encrypted before transmitting to a readout unit.

If the measured consumption data are read out by a mobile unit, the consumption data measured by the flowmeter have to be available whenever the user of the mobile unit wants to gather the consumption data in its read out unit. The user of the mobile unit does not want to wait for hours until he gets a telegram containing the information about the consumption data. Thus, in practice, a frequency of sent telegrams containing information about the consumption data collected by a flow meter being less than a minute is reasonable.

An encrypted telegram containing consumption data is sent as an answer telegram at a constant frequency of for example 15 or 30 seconds or on demand.

For each answer telegram a different encryption code containing an initialization vector is used. Using the same encryption code for different encryption operations increases the risk of decoding the encrypted data by unauthorized persons. In the present case the internal time of the flowmeter is used for the encryption and the internal time of the read out unit is used as a part of a key for the decryption. The internal time of the flowmeter and the read out meter must be the same.

Especially, in the encryption operation a secret key known by the receiver and the transmitter and an initialization vector are combined. The secret key exchanged between the receiver and transmitter remains constant while the initialization vector is different for each encryption operation. It must be avoided that the same initialization vector is used twice or even more often with the same secret key as using the same initialization vector twice or even more often might compromise data safety.

The flowmeters are installed in a household and collect consumption data with respect to the consumed water, gas, heat or electricity over many years. The internal clock in a flowmeter is set to the actual world time at the time of installation. During the months or years the flow meter is collecting consumption data, the internal clock will shift. The internal time of the flowmeter might be retarded or in advance compared to the actual real time. Having a lot of flowmeters, the time shift might be different in each flowmeter after a certain time. The degree of the time shift in a flowmeter is not predictable.

The decryption of the data in the read out unit will probably not be successful if the flow meter has a shifted internal time compared to the internal time of the read out unit.

Thus, the internal time of the flow meter has to be adjusted.

Fig. 1 shows a time table of different operations in a communication unit, wherein the internal time of the communication unit is in advance compared to a reference time according to a first embodiment. The communication unit having an internal time usually operates in the standard mode; the standard mode being the mode the system is operated on a regular basis and the internal time is used for encryption operations.

In the shown embodiment the communication unit is a flowmeter.

An encrypted telegram containing consumption data is sent as an answer telegram on demand. Between two answer telegrams several periodic information telegrams are sent every 15 seconds. The periodic information telegrams contain recurring information as non- updated consumption data. In detail, the content of the answer telegrams sent before are repeated in the periodic information telegrams. Also the periodic information telegrams are encrypted.

At the external reference time 18:44:10 being the actual world time, it was found out that the internal time of the flow meter is 19:00:00 and does not correspond to the correct world time. The time shift between the actual internal time and the external reference time is 16 minutes which is higher than a set threshold value. The comparison of the internal time and the external reference time might be done in the communication unit itself or outside the communication unit. In the latter case the information about a time shift is sent to the communication unit.

At the time of reading at 18:44:10 external time, the internal time was used for encryption or decryption for the last time in the standard mode. After that the method changes from the standard mode into a changing mode in which the internal time is corrected to the reference time being the world time. In detail the internal time is reset to the reference time at the beginning of the changing mode, namely to18:44:10.

Further a virtual internal time is defined. The virtual time value is set as a time value of the internal time before the internal time is reset. Thus, the initial value of the virtual internal time is an internal time value close to the value of the internal time at the beginning of the changing mode, namely 19:00:10. The initial value of the virtual internal time might also be the value of the internal time directly at the beginning of the changing mode, as 19:00:00 in this case. In the changing mode, the virtual internal time is used as or for an initialization vector.

Also at the beginning of the changing mode, the internal time is reset to the reference time. Thus, the internal time measures the time as required and is identical or at least comparable to the external reference time.

Now there is a time delay of 16 minutes between the internal time and the virtual internal time.

At the time the system or a read out unit respectively requires the transmission of a telegram containing updated consumption data, an answer-telegram containing encrypted consumption data is formed with an initialization vector using the virtual internal time. The virtual internal time used for the first encrypted answer-telegram is the initial value of the virtual internal time increased by a virtual time unit. The virtual time unit is a second.

It is called virtual time unit as the time unit corresponds to the time parameter but does not measure any time. The virtual internal time unit is a counter variable having a time unit.

Between two answer telegrams, periodic information telegrams are sent with a constant frequency of 15 seconds. In this method the periodic information telegrams contain recurring information of the consumption data already sent with the first answer telegram. Each periodic information telegram is encrypted, wherein the virtual internal time is used as an initialization vector. This means that every 15 seconds, the virtual internal value is increased by the virtual time unit of one second.

Thus, the internal time is going on with a higher speed than the virtual internal time.

After several repeated steps the internal time being identical with the reference time is in advance compared to the virtual internal time. In the present case this happens at 19:01:25.

If the actual internal time is in advance compared to the virtual internal time, the method changes from the changing mode to the standard mode in that the internal time is used for measuring the time and for encryption operation.

In the present case, after the changing mode, the first telegram in the standard mode is a periodic information telegram. It also might be an answer telegram. In the standard mode the internal time is used as initialization vector for encrypting the periodic information telegram or the answer telegram.

In this method each telegram is encrypted individually. Even if in the shown method recurring information is sent in the information telegrams, the method is also applicable to systems wherein the content of the individual information telegrams is different.

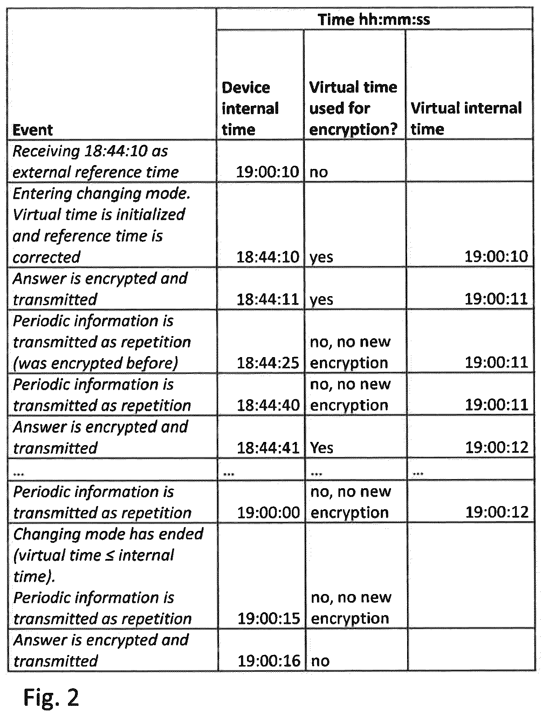

Fig. 2 shows a modified embodiment.

The embodiment shown in Fig. 2 differs from the embodiment shown in Fig. 1 in that an encrypted telegram containing consumption data is sent on demand, wherein two demands take place during the changing mode.

Between two answer telegrams, several periodic information telegrams are sent periodically, with the periodic information telegrams containing recurring information as for example non updated consumption data.

In this embodiment, the periodic information telegrams are repeatedly sent without an individual encryption. The several periodic information telegrams are identical to the answer telegram sent before. An initialization vector for encrypting data is only required if updated consumption data are sent in answer telegrams. The virtual internal time is only increased if an answer telegram is encrypted and sent.

The embodiment shown in Fig. 2 has the advantage that the condition in which the actual internal time being the reference time is in advance to the virtual internal time can be achieved in a shorter time under the assumption that the same number of periodic information telegrams are sent.

Further, in an embodiment not shown, additional information telegrams containing non sensitive data as for example information about the energy status of the communication unit are provided. As it is not necessary to encrypt this kind of information telegram, it is not necessary to increase the virtual internal time when sending these information telegrams.

Thus, information telegrams can be sent between two successive encrypted answer telegrams without influencing the virtual internal time.

The method for adjusting a time shift has been explained with respect to the case in that the internal time is advanced compared to the reference time.

The method for adjusting a time shift can also be used in the case the internal time is delayed compared to the reference time.

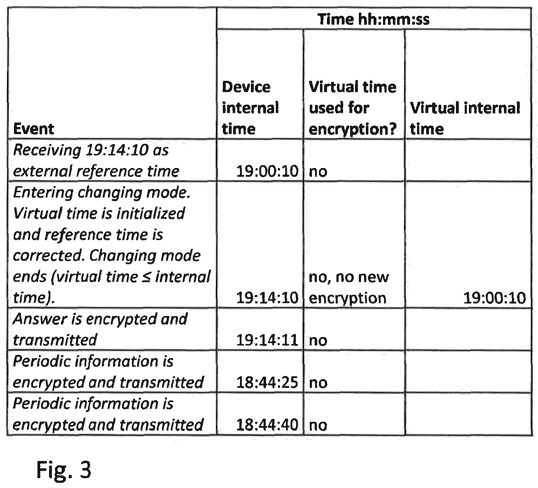

Fig. 3 shows the corresponding time table. In this case the changing mode is very short lasting as the condition in which the time value of the virtual time is delayed compared to the internal time can be fulfilled at the beginning of the changing mode.

Different embodiments have been explained. Within the scope of the present invention, there are also embodiments combining features for different embodiments shown, wherein features described within one embodiment might be omitted.

## Claims

1. A method for adjusting a shifted time in a communication unit, the communication unit being a transmitter and/or a receiver and being used in an encrypted communication,
wherein the communication unit has an internal time and the internal time is used for cryptographic operations,
**characterized by** following steps:
• receiving an external reference time,
• comparing the actual internal time of the communication unit and the external reference time,
• changing from a standard mode into a changing mode if the actual value of the internal time and the external reference time differ by a first time difference value,
• wherein in the standard mode the actual value of the internal time is used for cryptographic operations and for measuring the time and
• wherein in the changing mode
▪ the internal time is set to the external reference time and changed ongoing in real time
▪ a virtual internal time is used for cryptographic operations,
▪ the virtual internal time is incremented or increased by a virtual time unit each time data is encrypted and/or encrypted data is sent,
▪ the time duration of the virtual time unit is different from the time duration of the associated real time unit,
• changing from the changing mode to the standard mode if the virtual internal time and the internal time differ by a second time difference value, the second time difference value being less than the first time difference value.

2. The method according to claim 1, **characterized in that** the internal time is used as a time variable and as a counter variable, wherein in the changing mode the value of the internal time is different for the time variable and for the counter variable.

3. The method according to any one of the preceding claims, **characterized in that** in the changing mode the virtual internal time has an initial value, the initial value of the virtual internal time is set to the actual value of the internal time.

4. The method according to claim 3, **characterized in that** the initial virtual internal time is the actual time at the beginning of the changing mode

5. The method according to any one of the preceding claims, **characterized in that** the virtual time unit is an integer time unit.

6. The method according to any one of the preceding claims, **characterized in that** during the changing mode data are encrypted periodically and/or encrypted data are sent periodically and **in that** preferably the value of the virtual time unit is chosen as a time unit which mathematically leads to identical values of the virtual internal time and the internal time.

7. The method according to any one of claims 1 to 5, **characterized in that** during the changing mode data are encrypted on demand and/or encrypted data are sent on demand.

8. The method according to any one of the preceding claims, **characterized in that** the actual internal time is advanced compared to the reference time and **in that** the encrypted data are transmitted in defined time intervals and/or on demand, wherein the time duration between at least two successive encryption operations has a greater value than the virtual time unit.

9. A method according to any one of the preceding claims **characterized in that**:
• the actual time of the communication unit is in advance compared to the reference time,
• wherein at the beginning of the changing mode:
∘ the initial value of the virtual internal time is set to the value of the internal time wherein the virtual internal time is used as a counter parameter for encryption/decryption operations,
∘ the actual value of the internal time is set back to the reference time at the beginning of the changing mode wherein the internal time is used as a time parameter for measuring the real time,
• wherein in the changing mode the virtual internal time is incremented by a time unit after each encryption operation and/or after each transmission of encrypted data,
• wherein the changing mode is changed to the standard mode if the second time difference value is less than the first time difference value and if the value of the internal time and the virtual internal time have the same value or if the internal time is in advance to the virtual internal time.

10. The method according to claim 9, **characterized in that** the time duration for at least one incremental step is shorter than the time duration between two successive encrypting operations.

11. The method according to claim 10, **characterized in that** the virtual time unit is the smallest time unit in which the internal time unit is measured.

12. The method according to any one of claims 9 to 11, **characterized in that** encrypted data are transmitted in time ranges greater than 2 seconds, especially in time ranges greater than 10 seconds and the virtual time is increased by a unit of one second every time the encrypted data are transmitted.

13. The method according to any one of the preceding claims, **characterized in that** the same encrypted data telegram is transmitted during the changing mode at least twice without changing the virtual internal time.

14. The method according to any one of the preceding claims, **characterized in that** a non-encrypted data telegram is transmitted during the changing mode without changing the virtual internal time.

15. The method according to any one of the preceding claims, **characterized in that** the reference time is the official world time or related to the official world time.

## Patentansprüche

1. Verfahren zur Anpassung einer Zeitverschiebung in einer Kommunikationseinheit, wobei die Kommunikationseinheit ein Sender und/oder ein Empfänger ist und in einer verschlüsselten Kommunikation verwendet wird, wobei die Kommunikationseinheit eine interne Zeit aufweist und die interne Zeit für kryptografische Vorgänge verwendet wird,
**gekennzeichnet durch** folgende Schritte:
• Empfangen einer externen Referenzzeit,
• Vergleichen der tatsächlichen internen Zeit der Kommunikationseinheit mit der externen Referenzzeit,
• Wechseln von einem Standardmodus in einen Änderungsmodus, wenn der tatsächliche Wert der internen Zeit und die externe Referenzzeit um einen ersten Zeitdifferenzwert voneinander abweichen,
• wobei im Standardmodus der tatsächliche Wert der internen Zeit für kryptografische Vorgänge und zur Zeitmessung verwendet wird und
• wobei im Änderungsmodus
• die interne Zeit auf die externe Referenzzeit gesetzt und fortlaufend in Echtzeit geändert wird,
• eine virtuelle interne Zeit für kryptografische Vorgänge verwendet wird,
• die virtuelle interne Zeit bei jeder Verschlüsselung von Daten und/oder bei jeder Übertragung verschlüsselter Daten um eine virtuelle Zeiteinheit erhöht oder inkrementiert wird,
• die Zeitdauer der virtuellen Zeiteinheit von der Zeitdauer der zugehörigen Echtzeiteinheit abweicht,
• Wechseln vom Änderungsmodus in den Standardmodus, wenn die virtuelle interne Zeit und die interne Zeit um einen zweiten Zeitdifferenzwert voneinander abweichen, wobei der zweite Zeitdifferenzwert kleiner ist als der erste Zeitdifferenzwert.

2. Verfahren nach Anspruch 1, **dadurch gekennzeichnet, dass** die interne Zeit als Zeitvariable und als Zählervariable verwendet wird, wobei im Änderungsmodus der Wert der internen Zeit für die Zeitvariable und für die Zählervariable unterschiedlich ist.

3. Verfahren nach einem der vorhergehenden Ansprüche, **dadurch gekennzeichnet, dass** im Änderungsmodus die virtuelle interne Zeit einen Anfangswert aufweist, wobei der Anfangswert der virtuellen internen Zeit auf den tatsächlichen Wert der internen Zeit gesetzt wird.

4. Verfahren nach Anspruch 3, **dadurch gekennzeichnet, dass** die anfängliche virtuelle interne Zeit die tatsächliche Zeit zu Beginn des Änderungsmodus ist.

5. Verfahren nach einem der vorhergehenden Ansprüche, **dadurch gekennzeichnet, dass** die virtuelle Zeiteinheit eine ganzzahlige Zeiteinheit ist.

6. Verfahren nach einem der vorhergehenden Ansprüche, **dadurch gekennzeichnet, dass** während des Änderungsmodus Daten regelmäßig verschlüsselt werden und/oder verschlüsselte Daten regelmäßig gesendet werden und dass vorzugsweise der Wert der virtuellen Zeiteinheit als Zeiteinheit gewählt wird, welche mathematisch zu identischen Werten der virtuellen internen Zeit und der internen Zeit führt.

7. Verfahren nach einem der Ansprüche 1 bis 5, **dadurch gekennzeichnet, dass** während des Änderungsmodus Daten bei Bedarf verschlüsselt werden und/oder verschlüsselte Daten bei Bedarf gesendet werden.

8. Verfahren nach einem der vorhergehenden Ansprüche, **dadurch gekennzeichnet, dass** die tatsächliche interne Zeit gegenüber der Referenzzeit vorverlegt ist und dass die verschlüsselten Daten in bestimmten Zeitintervallen und/oder bei Bedarf übertragen werden, wobei die Zeitdauer zwischen mindestens zwei aufeinanderfolgenden Verschlüsselungsvorgängen einen größeren Wert als die virtuelle Zeiteinheit hat.

9. Verfahren nach einem der vorhergehenden Ansprüche, **dadurch gekennzeichnet, dass**:
• die tatsächliche Zeit der Kommunikationseinheit gegenüber der Referenzzeit vorverlegt ist,
• wobei zu Beginn des Änderungsmodus:
∘ der Anfangswert der virtuellen internen Zeit auf den Wert der internen Zeit gesetzt wird, wobei die virtuelle interne Zeit als Zählparameter für Verschlüsselungs-/Entschlüsselungsvorgänge verwendet wird,
∘ der tatsächliche Wert der internen Zeit zu Beginn des Änderungsmodus auf die Referenzzeit zurückgesetzt wird, wobei die interne Zeit als Zeitparameter zur Messung der Echtzeit verwendet wird,
• wobei im Änderungsmodus die virtuelle interne Zeit nach jedem Verschlüsselungsvorgang und/oder jeder Übertragung verschlüsselter Daten um eine Zeiteinheit erhöht wird,
• wobei der Änderungsmodus in den Standardmodus geändert wird, wenn der zweite Zeitdifferenzwert kleiner ist als der erste Zeitdifferenzwert und wenn der Wert der internen Zeit und der virtuellen internen Zeit denselben Wert aufweisen oder wenn die interne Zeit der virtuellen internen Zeit voraus ist.

10. Verfahren nach Anspruch 9, **dadurch gekennzeichnet, dass** die Zeitdauer für mindestens einen Inkrementierungsschritt kürzer ist als die Zeitdauer zwischen zwei aufeinanderfolgenden Verschlüsselungsvorgängen.

11. Verfahren nach Anspruch 10, **dadurch gekennzeichnet, dass** die virtuelle Zeiteinheit die kleinste Zeiteinheit ist, in der die interne Zeiteinheit gemessen wird.

12. Verfahren nach einem der Ansprüche 9 bis 11, **dadurch gekennzeichnet, dass** verschlüsselte Daten in Zeitspannen von mehr als 2 Sekunden, insbesondere in Zeitspannen von mehr als 10 Sekunden, übertragen werden und die virtuelle Zeit bei jeder Übertragung der verschlüsselten Daten um eine Einheit von einer Sekunde erhöht wird.

13. Verfahren nach einem der vorhergehenden Ansprüche, **dadurch gekennzeichnet, dass** während des Änderungsmodus dasselbe verschlüsselte Datentelegramm mindestens zweimal übertragen wird, ohne die virtuelle interne Zeit zu ändern.

14. Verfahren nach einem der vorhergehenden Ansprüche, **dadurch gekennzeichnet, dass** während des Änderungsmodus ein unverschlüsseltes Datentelegramm übertragen wird, ohne die virtuelle interne Zeit zu ändern.

15. Verfahren nach einem der vorhergehenden Ansprüche, **dadurch gekennzeichnet, dass** die Referenzzeit die offizielle Weltzeit ist oder sich auf die offizielle Weltzeit bezieht.

## Revendications

1. Procédé pour régler un temps décalé dans une unité de communication, l'unité de communication étant un émetteur et/ou un récepteur et étant utilisée lors d'une communication cryptée, dans lequel l'unité de communication dispose d'un temps interne et le temps interne est utilisé pour des opérations cryptographiques,
**caractérisé par** les étapes suivantes :
• la réception d'un temps de référence externe ;
• la comparaison du temps interne réel de l'unité de communication et du temps de référence externe ;
• le passage d'un mode standard à un mode de modification si la valeur réelle du temps interne et le temps de référence externe diffèrent d'une première valeur de différence de temps ;
• dans lequel, dans le mode standard, la valeur réelle du temps interne est utilisée pour des opérations cryptographiques et pour mesurer le temps ;
• dans lequel, dans le mode de modification :
▪ le temps interne est défini au temps de référence externe et est modifié de manière continue en temps réel ;
▪ un temps interne virtuel est utilisé pour des opérations cryptographiques ;
▪ le temps interne virtuel est incrémenté ou augmenté d'une unité de temps virtuel chaque fois que des données sont cryptées et/ou que des données cryptées sont envoyées ; et
▪ la durée de temps de l'unité de temps virtuel est différente de la durée de temps de l'unité de temps réel associée ; et
• le passage du mode de modification au mode standard si le temps interne virtuel et le temps interne diffèrent d'une seconde valeur de différence de temps, la seconde valeur de différence de temps étant inférieure à la première valeur de différence de temps.

2. Procédé selon la revendication 1, **caractérisé en ce que** le temps interne est utilisé en tant que variable de temps et en tant que variable de compteur, dans lequel, dans le mode de modification, la valeur du temps interne est différente pour la variable de temps et pour la variable de compteur.

3. Procédé selon l'une quelconque des revendications précédentes, **caractérisé en ce que**, dans le mode de modification, le temps interne virtuel présente une valeur initiale, et la valeur initiale du temps interne virtuel est définie à la valeur réelle du temps interne.

4. Procédé selon la revendication 3, **caractérisé en ce que** le temps interne virtuel initial est le temps réel au début du mode de modification.

5. Procédé selon l'une quelconque des revendications précédentes, **caractérisé en ce que** l'unité de temps virtuel est une unité de temps entière.

6. Procédé selon l'une quelconque des revendications précédentes, **caractérisé en ce que**, pendant le mode de modification, les données sont cryptées périodiquement et/ou les données cryptées sont envoyées périodiquement et **en ce que**, de préférence, la valeur de l'unité de temps virtuel est choisie en tant qu'unité de temps qui conduit mathématiquement à des valeurs identiques du temps interne virtuel et du temps interne.

7. Procédé selon l'une quelconque des revendications 1 à 5, **caractérisé en ce que**, pendant le mode de modification, les données sont cryptées à la demande et/ou les données cryptées sont envoyées à la demande.

8. Procédé selon l'une quelconque des revendications précédentes, **caractérisé en ce que** le temps interne réel est avancé par comparaison avec le temps de référence et **en ce que** les données cryptées sont transmises selon des intervalles temporels définis et/ou à la demande, dans lequel la durée de temps entre au moins deux opérations de cryptage successives présente une valeur plus grande que l'unité de temps virtuelle.

9. Procédé selon l'une quelconque des revendications précédentes, **caractérisé en ce que** :
• le temps réel de l'unité de communication est en avance par comparaison avec le temps de référence ;
• dans lequel, au début du mode de modification :
∘ la valeur initiale du temps interne virtuel est définie à la valeur du temps interne, dans lequel le temps interne virtuel est utilisé en tant que paramètre de compteur pour les opérations de cryptage/décryptage ; et
∘ la valeur réelle du temps interne est définie en retour au temps de référence au début du mode de modification, dans lequel le temps interne est utilisé en tant que paramètre de temps pour mesurer le temps réel ;
• dans lequel, dans le mode de modification, le temps interne virtuel est incrémenté d'une unité de temps après chaque opération de cryptage et/ou après chaque transmission de données cryptées ; et
• dans lequel le mode de modification est passé au mode standard si la seconde valeur de différence de temps est inférieure à la première valeur de différence de temps et si la valeur du temps interne et le temps interne virtuel présentent la même valeur ou si le temps interne est en avance par rapport au temps interne virtuel.

10. Procédé selon la revendication 9, **caractérisé en ce que** la durée de temps pour au moins un pas incrémentiel est plus courte que la durée de temps entre deux opérations de cryptage successives.

11. Procédé selon la revendication 10, **caractérisé en ce que** l'unité de temps virtuel est l'unité de temps la plus petite selon laquelle l'unité de temps interne est mesurée.

12. Procédé selon l'une quelconque des revendications 9 à 11, **caractérisé en ce que** les données cryptées sont transmises dans des plages de temps supérieures à 2 secondes, en particulier dans des plages de temps supérieures à 10 secondes et le temps virtuel est augmenté d'une unité d'une seconde chaque fois que les données cryptées sont transmises.

13. Procédé selon l'une quelconque des revendications précédentes, **caractérisé en ce que** le même télégramme de données cryptées est transmis pendant le mode de modification au moins deux fois sans modifier le temps interne virtuel.

14. Procédé selon l'une quelconque des revendications précédentes, **caractérisé en ce qu'**un télégramme de données non cryptées est transmis pendant le mode de modification sans modifier le temps interne virtuel.

15. Procédé selon l'une quelconque des revendications précédentes, **caractérisé en ce que** le temps de référence est le temps officiel mondial ou est rapporté au temps officiel mondial.
